# EUROPEAN PATENT APPLICATION

(11) **EP 4 411 619 A1**
(43) Date of publication of application: **07.08.2024**
(21) Application number: 21959252.4
(22) Date of filing: 28.09.2021
(51) Int. Cl.: G06Q 30/02, G06Q 50/30

(54) **COMMUNICATION DEVICE AND WIRELESS COMMUNICATION METHOD**

(71) Applicant: NTT DOCOMO, INC., Tokyo 100-6150 (JP)
(72) Inventor: MATSUMURA, Yuki, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2021/035634
(87) International publication number: WO 2023/053202

(57) **Abstract**

A communication device includes a communication unit that performs communication between a network device and a terminal, and a control unit that specifies a charge system for the communication. The control unit specifies the charge system based on one or more parameters selected from among a parameter related to a type element of the communication, a parameter related to a time element of the communication, a parameter related to a location element of the communication, a parameter related to a method of the communication, and a parameter related to user information of the terminal.

## Description

### [Technical Field]

The disclosure relates to a communication device and a radio communication method for specifying a charge system for communication between a network device and a terminal.

### [Background Art]

The 3rd Generation Partnership Project (3GPP) specifies the 5th generation mobile communication system (5G, also called New Radio (NR) or Next Generation (NG)) and is also working on the next generation specifications called Beyond 5G, 5G Evolution, or 6G.

A charge system for communication between a network device such as a base station and a terminal (UE; User Equipment) includes a basic charge portion which does not depend on a time of communication and a data amount of communication, and a metered charge portion which depends on the time of communication and the data amount of communication. The charge system is determined by a contract between a communication carrier and a user. For example, for the metered charge portion, a system in which a charge increases in steps every time the data amount of communication exceeds one or more threshold values, or a system in which a charge is fixed until the data amount of communication reaches an upper limit, is adopted (e.g., Non-Patent Literature 1).

### [Citation List]

### [Non-Patent Literature]

[Non-Patent Literature 1] "DATA PLAN", [Online], NTT DOCOMO, INC., [Retrieved on September 22, 2021], Internet <https://www.nttdocomo.co.jp/charge/data_plan/>

### [Summary of Invention]

In such a background, as a result of intensive studies, the inventors focused on a need to design network facilities based on a maximum traffic, and found a need to flexibly change the charge system to suppress the maximum traffic.

Therefore the present disclosure has been made in view of such a situation, and an object of the present disclosure provides a communication device and a radio communication method that can contribute suppression of a maximum traffic by flexibly changing a charge system.

An aspect of the disclosure is a communication device including: a communication unit that performs communication between a network device and a terminal; and a control unit that specifies a charge system for the communication, wherein the control unit specifies the charge system based on one or more parameters selected from among a parameter related to a type element of the communication, a parameter related to a time element of the communication, a parameter related to a location element of the communication, a parameter related to a method of the communication, and a parameter related to user information of the terminal.

An aspect of the disclosure is a radio communication method including: a step A of performing communication between a network device and a terminal; and a step B of specifying a charge system for the communication, wherein the step B includes a step of specifying the charge system based on one or more parameters selected from among a parameter related to a type element of the communication, a parameter related to a time element of the communication, a parameter related to a location element of the communication, a parameter related to a method of the communication, and a parameter related to user information of the terminal.

### [Brief Description of Drawings]

[FIG. 1] FIG. 1 is an overall schematic configuration diagram of a radio communication system 10.
[FIG. 2] FIG. 2 is a functional block configuration diagram of a NW device 300.
[FIG. 3] FIG. 3 is a functional block configuration diagram of a UE 200.
[FIG. 4] FIG. 4 is a diagram illustrating an example of notification of a charge system.
[FIG. 5] FIG. 5 is a diagram illustrating an example of display of a charge system.
[FIG. 6] FIG. 6 is a diagram illustrating an example of display of a charge system.
[FIG. 7] FIG. 7 is a diagram illustrating an example of setting of a charge system.
[FIG. 8] FIG. 8 is a diagram illustrating an example of setting of a charge system.
[FIG. 9] FIG. 9 is a diagram illustrating an example of setting of a charge system.
[FIG. 10] FIG. 10 is a diagram illustrating an example of a hardware configuration of the UE 200 and the NW device 300.
[FIG. 11] FIG. 11 is a diagram illustrating an example of a configuration of a vehicle 2001.

### [Modes for Carrying out the Invention]

Exemplary embodiments will be described below with reference to the accompanying drawings. Note that the same functions or structures will be denoted by the same or similar reference numerals, and their descriptions are omitted accordingly.

### [Embodiments]

### (1) Overall schematic configuration of radio communication system

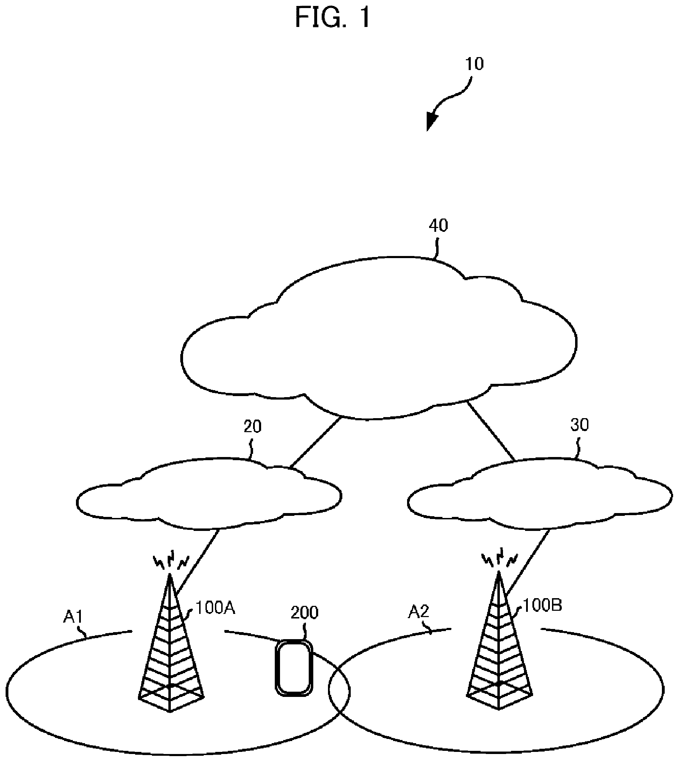

FIG. 1 is an overall schematic configuration diagram of the radio communication system 10 according to an embodiment. The radio communication system 10 is a radio communication system according to Long Term Evolution (LTE) and 5G New Radio (NR). Note that LTE can be called 4G, and NR can be called 5G or 6G.

Also, each of LTE and NR can be interpreted as a radio access technology (RAT). In the embodiment, LTE can be called a first radio access technology, and NR can be called a second radio access technology.

The radio communication system 10 includes an Evolved Universal Terrestrial Radio Access Network 20 (hereinafter, called E-UTRAN 20) and a Next Generation-Radio Access Network 30 (hereinafter, called NG RAN 30). The radio communication system 10 also includes a terminal 200 (hereinafter, called UE 200 or User Equipment)

The E-UTRAN 20 includes an eNB 100A which is a base station according to LTE. The eNB 100A may be one example of a base station or one example of a peripheral base station.

The NG RAN 30 includes a gNB 100B which is a base station according to 5G (NR). The gNB 100B may be one example of the base station or one example of the peripheral base station.

The eNB 100A, the gNB 100B, and the UE 200 can support Carrier Aggregation (CA) which uses a plurality of component carriers (CCs), Dual Connectivity (DC) which simultaneously performs communicate between the UE and each of Nodes, and the like.

More specifically, each of the eNB 100A and the gNB 100B can form an area (may be described as a cell), specifically an area A1 or an area A2, where radio communication with the UE 200 can be performed.

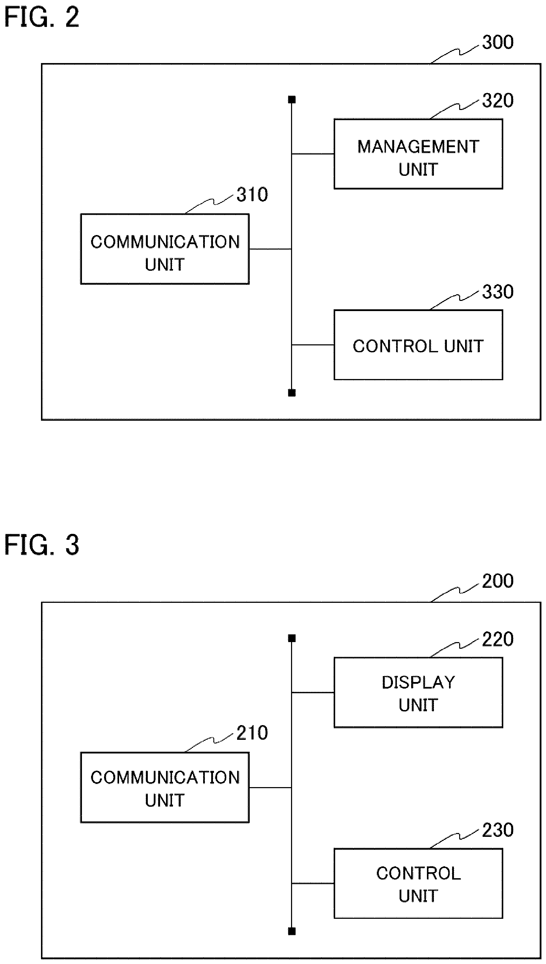

Here, the area A1 may be interpreted as an area where the UE 200 can communicate with the eNB 100A. The area A2 may be interpreted as an area where the UE 200 can communicate with the gNB 100B. The area A1 and the area A2 may overlap each other. EN-DC (E-UTRA-NR Dual Connectivity) or NE-DC (NR-EUTRA Dual Connectivity) in which the UE 200 simultaneously performs communication with the eNB 100A and the gNB 100B, may be performed in an area where the area A1 and the area A2 overlap. Note that although FIG. 2 illustrates an exemplary case in which a base station that can communicate with the UE 200 in the area A1 is the eNB 100A, the base station that can communicate with the UE 200 in the area A1 may be the gNB 100B provided in the NG RAN 30. In such a case, NR-DC (NR-NR Dual Connectivity) in which the UE 200 communicate with two or more gNBs 100B (or cells) simultaneously, may be performed.

In DC described above, a group of cells that can perform processing related to a C-plane (control plane) and a U-plane (user plane) may be called a first cell group (MCG; Master Cell Group). In DC described above, a group of cells that can perform processing related to a U-plane (user plane) may be called a second cell group (SCG; Secondary Cell Group). For example, in EN-DC described above, the eNB 100A may be called MN (Master Node) and the gNB 100B may be called SN (Secondary Node). In NE-DC described above, the eNB 100A may be called SN and the gNB 100B may be called MN. EN-DC, NE-DC and NR-DC may be referred to as MR (Multi-RAT)-DC.

The E-UTRAN 20 and the NG RAN 30 are connected to a core network 40. Note that the E-UTRAN 20, the NG RAN 30 and the core network 40 can be simply called a network.

The core network 40 may include a first core network connected to the E-UTRAN 20. The first core network may be referred to as an EPC (Evolved Packet Core). The first core network may include an MME (Mobility Management Entity). The MME may be one example of a network node. The MME is a network node which performs processing for a control plane. A node may be called a function.

The core network 40 may include a second core network connected to the NG RAN 30. The second core network may be referred to as a 5GC or 6GC. The second core network may include an AMF (Access and Mobility Management Function) . The AMF may be one example of a network node. The AMF is a network node which performs processing for a control plane. A node may be called a function.

### (2) Functional block configuration of radio communication system

Next, a functional block configuration of the radio communication system 10 will be described.

First, a functional block configuration of a network device (hereinafter, called NW device) 300 will be described. FIG. 2 is a functional block configuration diagram of the NW device 300. The NW device 300 may be the eNB 100A or the gNB100B. The NW device 300 may be the MME or the AMF. In the embodiment, the NW device 300 may be one example of a communication device. The NW device 300 includes a communication unit 310, a management unit 320 and a control unit 330.

The communication unit 310 performs communication. In the embodiment, the communication unit 310 configures a communication unit which performs communication between the NW device 300 and the UE 200. The communication unit 310 may receive various signals from the UE 200. The communication unit 310 may receive a UL signal via a UL channel such as PUCCH (Physical Uplink Control Channel) or PUSCH (Physical Uplink Shared Channel). The communication unit 310 may transmit various signals to the UE 200. The communication unit 310 may transmit a DL signal via a DL channel such as PDCCH (Physical Downlink Control Channel) or PDSCH (Physical Downlink Shared Channel).

The management unit 320 manages information. For example, the management unit 320 manages a charge system for communication between the NW device 300 and the UE 200. The management unit 320 may manage a communication charge of the UE 200 which is calculated based on the charge system.

The charge system may include a basic charge portion which does not depend on a time of communication and a data amount of communication. The basic charge portion may be determined by a contract between a communication carrier and a user who uses the UE 200. For example, the basic charge portion may be defined in a form of "** yen per month" according to a charge plan related to the charge system.

The charge system may include a metered charge portion which depends on the time of communication and the data amount of communication. For example, a metered charge portion related to the time of communication may be defined in a form of a unit price (e.g., "** yen per 60 seconds") expressed by a charge for a time of specific communication. The metered charge portion related to the time of communication may include a free portion until a time of communication exceeds a certain amount of time. For example, a metered charge portion related to the data amount of communication may include a system in which a charge increases in steps every time the data amount of communication exceeds one or more threshold values (e.g., "** yen per month up to 1GB" or "** yen per month up to 3GB"). The metered charge portion related to the data amount of communication may include a system in which a charge is fixed until the data amount of communication reaches an upper limit (e.g., "** yen (20GB) per month").

The control unit 330 controls the NE device 300. In the embodiment, the control unit 330 configures a control unit which specifies a charge system for communication between the NW device 300 and the UE 200. The control unit 330 specifies a charge system based on one or more parameters selected from among a parameter related to a type element of communication, a parameter related to a time element of communication, a parameter related to a location element of communication, a parameter related to a method of communication, and a parameter related to user information of a terminal. In other words, the charge system is dynamically changed based on one or more parameters selected from among the above-described parameters.

The control unit 330 may instruct the communication unit 310 to perform notification of information element related to a specified charge system. In the embodiment, the communication unit 310 may configure a notification unit which notifies the UE 200 of the information element related to the specified charge system.

Secondly, a functional block configuration of the UE 200 will be described. FIG. 3 is a functional block configuration diagram of the UE 200. In the embodiment, the UE 200 may be one example of the communication device. The UE 200 includes a communication unit 210, a display unit 220 and a control unit 230.

The communication unit 210 performs communication. In the embodiment, the communication unit 210 configures a communication unit which performs communication between the NW device 300 and the UE 200. The communication unit 210 may transmit various signals to the NW device 300. The communication unit 210 may transmit the UL signal via the UL channel such as PUCCH or PUSCH. The communication unit 210 may receive various signals from the NW device 300. The communication unit 210 may receive the DL signal via the DL channel such as PDCCH or PDSCH.

The display unit 220 displays information. The display unit 220 may be configured by a display or an indicator lamp such as LED.

The control unit 230 controls the UE 200. In the embodiment, the control unit 230 configures a control unit which specifies a charge system for communication between the NW device 300 and the UE 200. The control unit 230 specifies a charge system based on one or more parameters selected from among a parameter related to a type element of communication, a parameter related to a time element of communication, a parameter related to a location element of communication, a parameter related to a method of communication, and a parameter related to user information of a terminal. In other words, the charge system is dynamically changed based on one or more parameters selected from among the above-described parameters.

The control unit 230 may instruct the display unit 220 to perform display of information on the specified charge system. In the embodiment, the display nit 220 may configure display unit which displays information on the specified charge system.

### (3) Parameters

As described above, the charge system is dynamically changed based on one or more parameters selected from among parameters which will be described below. The change in the charge system may include a change in the basic charge portion and/or a change in the metered charge portion. The change in the metered charge portion may include a change in the metered charge portion related to the time of communication and/or a change in the metered charge portion related to the data amount of communication.

First, the change in the metered charge portion related to the time of communication may include a change in a unit price expressed by a charge for a time of specific communication. The change in the unit price may include a change in a length of the time of specific communication and/or a change in a charge for the time of specific communication. For example, if there are a "low charge" and a "high charge" as the metered charge portion related to the time of communication, the "low charge" may be based on a system such as 5 yen per 60 seconds, and the "high charge" may be based on a system such as 17 yen per 60 seconds. Note that 5 yen per 60 seconds and 17 yen per 60 seconds are examples and the systems are not limited to these. For the unit price and the unit charge per a certain period, the "low charge" may be equal to the "high charge" or cheaper/lower/smaller than the "high charge".

Secondly, the change in the metered charge portion related to the data amount of communication may include a change in a unit price expressed by a charge for a data amount of specific communication. The change in the unit price may include a change in a magnitude of the data amount of specific communication and/or a change in a charge for the data amount of specific communication. For example, if there are a "low charge" and a "high charge" as the metered charge portion related to the data amount of communication, the "low charge" may be based on a system such as 1 yen per 1 Byte, and the "high charge" may be based on a system such as 3 yen per 1 Byte. Note that 1 yen per 1 Byte and 3 yen per 1 Byte are examples and the systems are not limited to these. For the unit price and the unit charge per a certain data amount, the "low charge" may be equal to the "high charge" or cheaper/lower/smaller than the "high charge".

Thirdly, the change in the metered charge portion related to the data amount of communication may include a change in a weighting value for the data amount of communication. For example, when a high metered charge portion is applied, a relatively large value may be used as the weighting value for the data amount of communication such that the data amount of communication is easy to reach a threshold value or an upper limit. On the other hand, when a low metered charge portion is applied, a relatively small value may be used as the weighting value for the data amount of communication such that the data amount of communication is difficult to reach the threshold value or the upper limit. For example, if there are a "low charge" and a "high charge" as the metered charge portion related to the data amount of communication, the "low charge" may be based on a system in which "0.5" is applied as the weighting value, and the "high charge" may be based on a system in which "1" is applied as the weighting value. Namely, in a case where the low charge is applied, if a real data amount of communication is 1 Byte, 1 Byte * 0.5 = 0.5 Bytes may be counted as a record of the data amount of communication. In a case where the high charge is applied, if a real data amount of communication is 1 Byte, 1 Byte * 1 = 1 Byte may be counted as a record of the data amount of communication. Note that the weighting values (1 and 0.5) are examples and the systems are not limited to these. The weighting value of the "low charge" may be equal to the weighting value of the "high charge" or lower/smaller than the weighting value of the "high charge".

In such a case, the charge system may include a metered charge portion related to the data amount of communication to which the "low charge" is applied, and a metered charge portion related to the data amount of communication to which the "high charge" is applied. For example, the data amount of communication to which the "low charge" is applied and the data amount of communication to which the "high charge" is applied, may be separately counted. One or more threshold values and upper limits for the data amount of communication to which the "low charge" is applied, and one or more threshold values and upper limits for the data amount of communication to which the "high charge" is applied may be separately defined.

In the following, an example of the charge system is given below for the metered charge portion related to the data amount of communication. For the sake of simplicity, the following example shows a case in which the metered charge portion related to the data amount of communication has two types: "high charge" and "low charge".

### (3.1) Type element of communication

The parameter related to the type element of communication may include a parameter related to communication quality, a parameter related to communication delay, and/or a parameter related to communication priority.

For example, the following is an example of a case in which the type element of communication has two types ("normal data" and "high quality/low latency data"). The normal data may include audio data or video data viewed on the UE 200, call data using the UE 200, and the like. The high quality/low latency data may include data such as VR (Virtual Reality), AR (Augmented Reality), MR (Mixed Reality), XR (Cross Reality), V2X, and the like. The two type elements of the communication may be distinguished by a "priority indicator" included in DCI. In such a case, the "low charge" may be applied to the normal data, and the "high charge" may be applied to the high quality/low latency data.

### (3.2) Time element of communication

The parameter related to the time element of communication may include a parameter related to time of day, and/or a parameter related to day of week.

For example, the following is an example of a case in which the time of day has two types (e.g., "low load time of day" and "high load time of day"). The low load time of day may be time of day when a load on the radio communication system 10 is assumed to be low (e.g., time of day other than 18:00-22:00). The high load time of day may be time of day when a load on the radio communication system 10 is assumed to be high (e.g., 18:00-22:00). The low load time of day and the high load time of day may be set based on a load on the radio communication system 10 in the past. In such a case, the "low charge" may be applied to communication in the low load time of day, and the "high charge" may be applied to communication in high load time of day.

Similarly, the following is an example of a case in which the day of week has two types (e.g., "low load day of week" and "high load day of week"). The low load day of week may be day of week when a load on the radio communication system 10 is assumed to be low (e.g., weekday). The high load day of week may be day of week when a load on the radio communication system 10 is assumed to be high (e.g., holiday). The low load day of week and the high load day of week may be set based on a load on the radio communication system 10 in the past. In such a case, the "low charge" may be applied to communication in the low load day of week, and the "high charge" may be applied to communication in high load day of week.

### (3.3) Location element of communication

The parameter related to the location element of communication may be a parameter related to an area to which two or more base stations belong, and/or a parameter related to a base station. In either case, the parameter related to the location element of communication may be identified by an ID of a base station.

For example, the following is an example of a case in which the area has two types (e.g., a "low load area" and a "high load area"). The low load area may be an area where a flow of people is assumed to be low, and/or an area (e.g., suburban area) where a load on the wireless communication system 10 is assumed to be low. The high load area may be an area where a flow of people is assumed to be high, and/or an area (e.g., city center) where a load on the wireless communication system 10 is assumed to be high. In such a case, the "low charge" may be applied to communication in a low load area, and the "high charge" may be applied to communication in a high load area. The low load area and the high load area may be arbitrarily set/determined by the communication carrier. The low load area and the high load area may be made known in advance by the communication carrier to users through a website, catalog, poster, and the like. The low load area may be an area where a population per predetermined area is less than a predetermined value, and the high load area may be an area where a population per predetermined area is greater than the predetermined value. The low load area may be an area where the number of terminals connecting to a base station is less than a predetermined value, and the high load area may be an area where the number of terminals connecting to a base station is greater than the predetermined value. Switching between the low load area and the high load area may be performed based on terminal location information based on GPS or information on radio communication between a base station and a terminal, or based on base station location information of a base station (in other words, a cell ID of the base station) to which a terminal has a radio connection.

Similarly, the following is an example of a case in which the base station has two types (e.g., a "low load base station" and a "high load base station"). The low load base station may be a base station which covers an area where a flow of people is assumed to be low and an area (e.g., an area outside of a station vicinity or a commercial facility) where a load on the radio communication system 10 is assumed to be low. The high load base station may be a base station which covers an area where a flow of people is assumed to be high and an area (e.g., a station vicinity or a commercial facility) where a load on the radio communication system 10 is assumed to be high. In such a case, the "low charge" may be applied to communication in the low load base station, and the "high charge" may be applied to communication in the high load base station.

### (3.4) Method of communication

The parameter related to the method of communication may include a parameter related to the newness (hereinafter, called generation) of the method of communication, and/or a parameter related to a function or a use (hereinafter, simply called function) of the method of communication.

For example, the following is an example of a case in which the generation of communication has two types (e.g., "old generation" and "new generation"). The old generation may be a generation other than 5G, 5G-Advance, and 6G. The new generation may be a generation of 5G, 5G-Advance, or 6G. In such a case, the "low charge" may be applied to communication in the old generation, and the "high charge" may be applied to communication in the new generation.

Similarly, the following is an example of a case in which the function of communication has two types (e.g., "normal function" and "special function"). The normal function may be a function other than Sidelink, D2D, V2X, satellite communication, HAPS (High Altitude Platform Station) communication, and drone base station communication. The special function may be Sidelink, D2D, V2X, satellite communication, HAPS (High Altitude Platform Station) communication, or drone base station communication. In such a case, the "low charge" may be applied to communication in the normal function, and the "high charge" may be applied to communication in the specific function.

### (3.5) User information

The parameter related to user information may include a parameter related to a contract type, a parameter related to a payment status, and/or a parameter related to a usage history of communication (traffic) . The user information may be identified by a SIM (Subscriber Identity Module) installed in the UE 200.

For example, the following is an example of a case in which the contract type has two types (e.g., "corporate contract" and "individual contract"). The corporate contract may be a contract in which an entity contracting with the communication carrier is a corporation. The individual contract may be a contract in which an entity contracting with the communication carrier is an individual. In such a case, the "low charge" may be applied to communication under a corporate contract, and the "high charge" may be applied to communication under an individual contract.

Similarly, the following is an example of a case in which the payment status has two types (e.g., "no outstanding payment" and "outstanding payment"). The no outstanding payment may be a situation where there is no outstanding payment for a billed charge. The outstanding payment may be a situation where there is outstanding payment for a billed charge. In such a case, the "low charge" may be applied to communication of a user with the no outstanding payment, and the "high charge" may be applied to communication of a user with the outstanding payment.

Similarly, the following is an example of a case in which the usage history has two types (e.g., "low usage history" and "high usage history"). The low usage history may be a history in which a total amount of communication (traffic) in a usage history for a reference period (e.g., last month) is less than a threshold value, or a history in which a peak of communication (traffic) in a usage history for a reference period (e.g., last month) is less than a threshold value. The high usage history may be a history in which a total amount of communication (traffic) in a usage history for the reference period (e.g., last month) is greater than the threshold value, or a history in which a peak of communication (traffic) in a usage history for the reference period (e.g., last month) is greater than the threshold value. In such a case, the "low charge" may be applied to communication of a user with the low usage history, and the "high charge" may be applied to communications of a user with the high usage history.

### (4) Notification of charge system

As described above, the NW device 300 notifies the UE 200 of the information element related to the specified charge system.

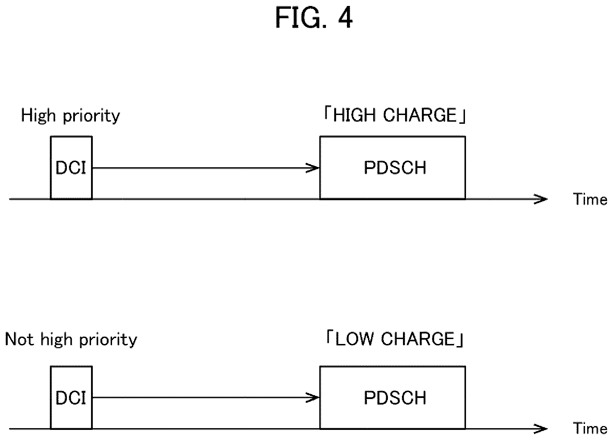

For example, the following is an example of a case in which the parameter used to specify the charge system is the parameter related to the type element of the communication. As illustrated in FIG. 4, the information element may be a priority indicator included in the DCI. For example, when High priority is set to the priority indicator included in the DCI, the "high charge" may be applied to data received via PDSCH. On the other hand, when High priority is set to the priority indicator included in the DCI, the "low charge" may be applied to data received via PDSCH.

Here, the case in which the information element related to the charge system is notified by the priority indicator included in the DCI, is illustrated. However, the embodiment is not limited to this.

For example, the information element related to the charge system may be notified by an RRC message from the base station, by broadcast information from the base station, or by a MAC CE message from the base station. The information element related to the charge system may be notified by a signaling from the core network. The information element related to the charge system may be notified by a signaling at an application level. Notification may be explicit or implicit.

### (5) Display of charge system

As described above, the UE 200 displays information on the specified charge system. The following is an example of a case in which the charge system has two types, the "low charge" and the "high charge".

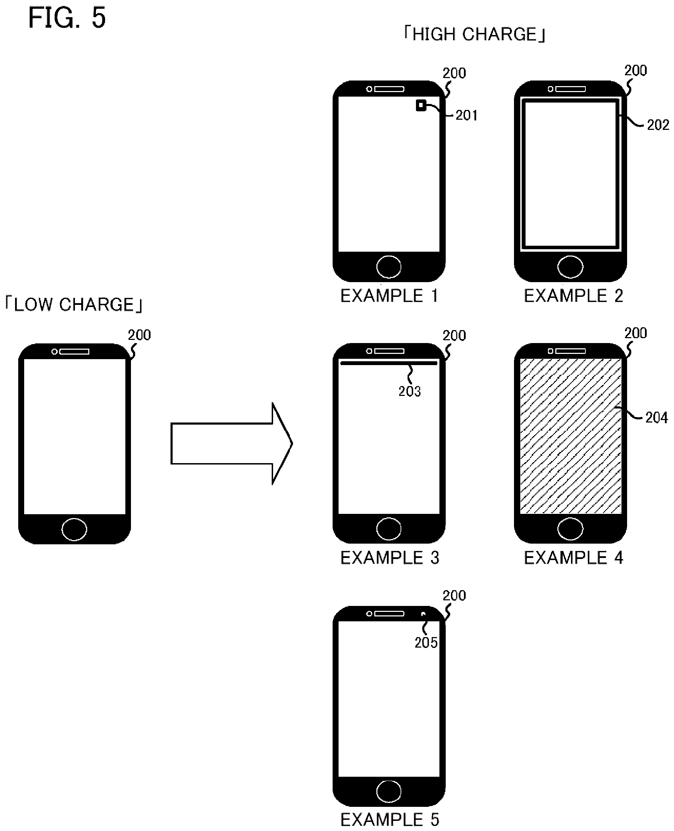

First, a case in which the UE 200 displays information on the specified charge system thereon, will be described. As illustrated in FIG. 5, the UE 200 may display information on the charge system in a non-displayed manner when the "low charge" is applied, and display information on the charge system when the "high charge" is applied. In Example 1, an icon 201 is displayed to indicate that the "high charge" is applied to the current communication. In Example 2, a frame line 202 is displayed to indicate that the "high charge" is applied to the current communication. In Example 3, a bar 203 is displayed to indicate that the "high charge" is applied to the current communication. In Example 4, a background color 204 is displayed to indicate that the "high charge" is applied to the current communication. In Example 5, an indicator lamp 205 is displayed to indicate that the "high charge" is applied to the current communication.

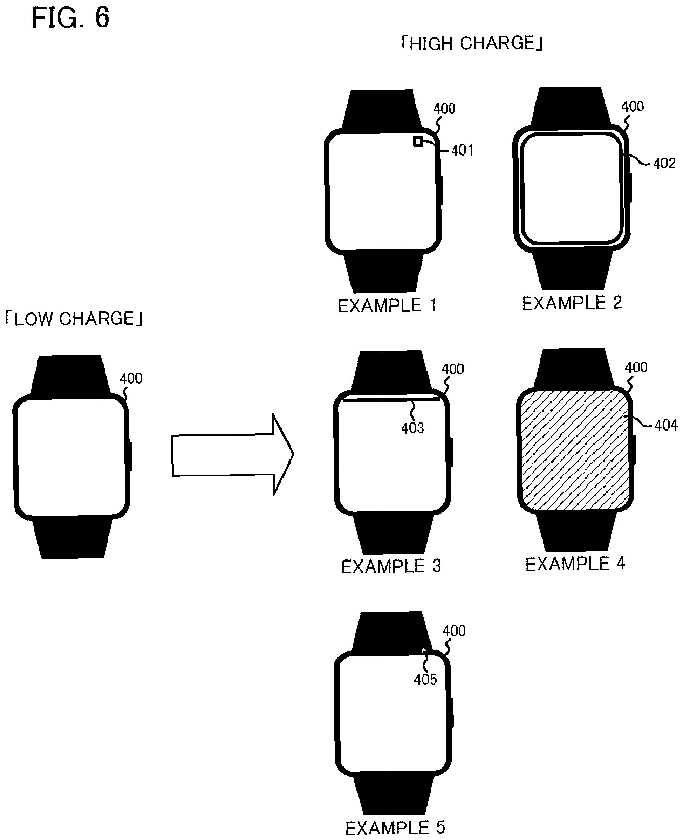

Secondly, a case in which the UE 200 displays information on the specified charge system on a smartwatch 400, will be described. The smartwatch 400 is a device connected to the UE 200 via short-range radio communication (e.g., Bluetooth or the like). As illustrated in FIG. 6, the UE 200 may display information on the charge system when the "high charge" is applied, without displaying information on the charge system when the "low charge" is applied. In Example 1, an icon 401 is displayed to indicate that the "high charge" is applied to the current communication. In Example 2, a frame line 402 is displayed to indicate that the "high charge" is applied to the current communication. In Example 3, a bar 403 is displayed to indicate that the "high charge" is applied to the current communication. In Example 4, a background color 404 is displayed to indicate that the "high charge" is applied to the current communication. In Example 5, an indicator lamp 405 is displayed to indicate that the "high charge" is applied to the current communication.

One or more forms selected from among the icon, the frame line, the bar, the background color, and the indicator lamp, may be displayed to indicate that the "high charge" is applied to the current communication.

In each of FIGS. 5 and 6, the cases in which the fact that the "low charge" is applied to the current communication is indicated in the non-displayed manner, are illustrated. However, the embodiment is not limited to this. The fact that the "low charge" is applied to the current communication, may be indicated by the display of an icon, a frame line, a bar, a background color, or an indicator lamp. The "low charge" and the "high charge" may be distinguished by types or colors of an icon, a frame line, a bar, a background color, or an indicator lamp. Note that the non-display manner can be considered one type of display manner.

The fact that the "low charge" is applied to the current communication can be indicated by the display of one or more of forms selected from among the icon, the frame line, the bar, the background color, and the indicator lamp.

Here, the display of information on the charge system can be changed for each data scheduling. However, there is a possibility that the display of information on the charge system frequently changes (e.g., every few ms). Therefore, the display of information on the charge system may be performed based on a result of specifying the charge system in a certain period of time. For example, if the data amount of communication to which the "low charge" is applied is greater than the data amount of communication to which the "high charge" is applied in the certain period of time, the UE 200 may indicate that the "low charge" is applied to the current communication via the displaying. If the data amount of communication to which the "high charge" is applied is greater than the data amount of communication to which the "low charge" is applied in the certain period of time, the UE 200 may indicate that the "high charge" is applied to the current communication via the displaying.

### (6) Configuration of charge system for each base station

The charge system is configurable for each base station (serving cell) . Here, a case in which the charge system has two types, the "low charge" and "high charge", will be illustrated. Further, a case in which the charge system is defined by parameters related to the time of day will be illustrated.

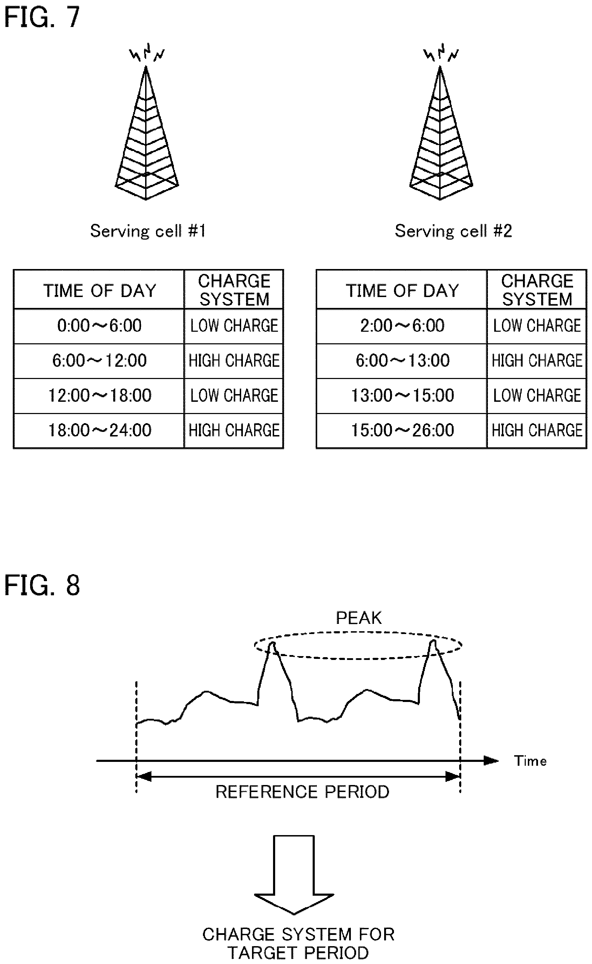

As illustrated in FIG. 7, in Serving cell #1, the "low charge" may be applied from 0:00 to 6:00, the "high charge" may be applied from 6:00 to 12:00, the "low charge" may be applied from 12:00 to 18:00, and the "high charge" may be applied from 18:00 to 24:00. On the other hand, in Serving cell #2, the "low charge" may be applied from 2:00 to 6:00, the "high charge" may be applied from 6:00 to 13:00, the "low charge" may be applied from 13:00 to 15:00, and the "high charge" may be applied from 15:00 to 26:00.

Thus, the charge system is configurable for each base station (serving cell). The charge system may be determined by communication load or the like in an area where a base station is installed.

In such a case, the UE 200 may be notified of an information element related to the charge system set for each base station. The information element related to the charge system may be notified by an RRC message from the base station, by broadcast information from the base station, by a MAC CE message from the base station, or by DCI from the base station. The information element related to the charge system may be notified by a signaling from the core network. The information element related to the charge system may be notified by a signaling at an application level. Notification may be explicit or implicit.

Here, the base station may notify the UE 200 of an information element related to the charge system set for the own base station. In addition to the charge system set for the own base station, the base station may notify the UE 200 of an information element related to the charge system set for a base station adjacent to the own base station.

The UE 200 may display information on the specified charge system based on the charge system set for each base station (see FIG.5 and FIG.6) .

### (7) Setting of charge system based on communication history

The charge system may be set based on a communication history between the NW 300 and the UE 200. The communication history may be considered to be an example of the user information described above. Here, a case in which the charge system for a target period is set based on a communication history for a reference period prior to the target period, will be illustrated. The target period may be the n-th month, and the reference period mat be the (n-1)-th month.

In such a case, the charge system for the target period may be set based on a total amount of usage history of communication (traffic) for the reference period, or based on a peak in usage history of communication (traffic) for the reference period.

First, assuming a case in which the basic charge portion is changed as the charge system for the target period, the basic charge portion for the target period may be set such that the higher the total amount of usage history of communication (traffic) for the reference period is, the higher the basic charge portion for the target period is. In other words, the basic charge portion for the target period may be set such that the lower the total amount of usage history of communication (traffic) for the reference period is, the lower the basic charge portion for the target period is. Similarly, the base charge portion for the target period may be set such that the higher the peak in usage history of communication (traffic) for the reference period is, the higher the base charge portion for the target period is. In other words, the base rate portion for the target period can be set such that the lower the peak in usage history of communication (traffic) for the reference period is, the lower the base rate portion for the target period is.

Secondly, assuming a case in which the metered charge portion is changed as the charge system for the target period, the unit price or the weighting value of the metered charge portion for the target period may be set such that the higher the total amount of usage history of communication (traffic) for the reference period is, the higher the unit price or the larger the weighting value of the metered charge portion for the target period is. In other words, the unit price or the weighting value of the metered charge portion for the target period may be set such that the lower the total amount of usage history of communication (traffic) for the reference period is, the lower the unit price or the smaller the weighting value of the metered charge portion for the target period is. Similarly, the unit price or the weighting value of the metered charge portion for the target period may be set such that the higher the peak in usage history of communication (traffic) for the reference period is, the higher the unit price or the larger the weighting value of the metered charge portion for the target period is. In other words, the unit price or the weighting value of the metered charge portion for the target period may be set such that the lower the peak in usage history of communication (traffic) for the reference period is, the lower the unit price or the smaller the weighting value of the metered charge portion for the target period is.

Furthermore, if the data amount of communication to which the "low charge" is applied and the data amount of communication to which the "high charge" is applied are separately counted, the charge system for the target period may be set based on a balance between the usage history of communication to which the "low charge" is applied and the usage history of communication to which the "high charge" is applied. Alternately, the charge system for the target period may be set based on the usage history of communication to which the "high rate" is applied, without reference to the usage history of communication to which the "low rate" is applied. The charge system for the target period may be set based on the usage history of communication to which the "low charge" is applied, without reference to the usage history of communication to which the "high charge" is applied.

### (8) Setting of charge system based on user selection

The charge system may be set based on selection of the user of the UE 200. Here, a case in which the charge system is defined by the parameter related to the type element of the communication, will be illustrated. Furthermore, a case in which the type element of communication has two types ("normal data" and "high quality data"), will be illustrated.

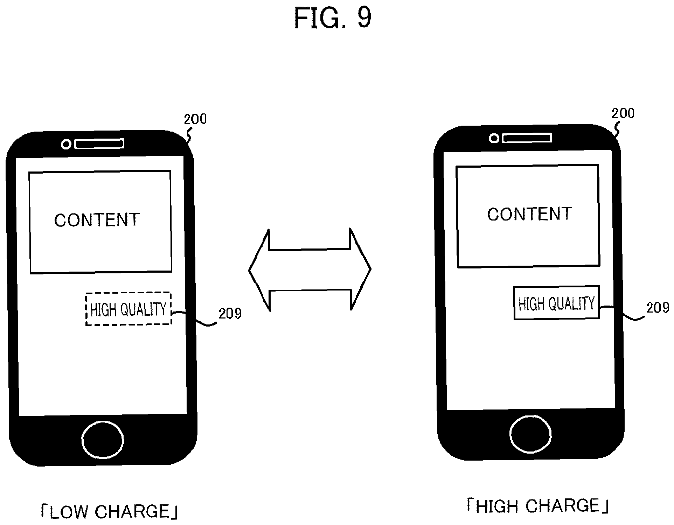

As illustrated in FIG. 9, a button ("High Quality" in FIG. 9) may be prepared for the user to select high quality data. If "high quality" is not selected, the "low charge" is applied. If "high quality" is not selected, the "high charge" is applied.

First, a flow in which reception of high quality data is set, will be described.

When the "High Quality" button is selected in a state where the normal data is being received, the UE 200 transmits to the NW device 300, a message for requesting reception of high quality data.

The NW device 300 configures communication of high quality data. The UE 200 receives the high quality data from the NW device 300.

The NW device 300 calculates a communication charge for a user based on the "high charge" which is applied to the high quality data.

The UE 200 indicates the fact that the "high charge" is applied by displaying. For example, the UE 200 indicates the fact that the "High Quality" button is activated by displaying. The UE 200 may indicate the fact that the "high charge" is applied by displaying in the form illustrated in FIG. 5 or FIG. 6 described above.

Secondly, a flow in which the reception of high quality data is released, will be described.

When the "High Quality" button is selected in a state where high quality data is being received, the UE200 transmits to the NW device 300, a message for requesting reception of normal data.

The NW device 300 configures communication of normal data. The UE200 receives the normal data from the NW device 300.

The NW device 300 calculates a communication charge for a user based on the "low charge" which is applied to the normal data.

The UE 200 indicates the fact that the "low charge" is applied by displaying. For example, the UE 200 indicates the fact that the "High Quality" button is deactivated by displaying. The UE 200 may indicate the fact that the "low charge" is applied by displaying in the form illustrated in FIG. 5 or FIG. 6 described above.

### (9) Action and Effect

In the embodiment, the communication device (the NW device 300 or the UE 200) specifies a charge system based on one or more parameters selected from among a parameter related to the type element of communication, a parameter related to the time element of communication, a parameter related to the location element of communication, a parameter related to the method of communication, and a parameter related to user information of a terminal. According to this configuration, the charge system can be flexibly (dynamically) changed, which contributes to the suppression of maximum traffic.

In the embodiment, the NW device 300 can notify the UE 200 of the information element related to the charge system. According to this configuration, the UE 200 can specify the charge system which is dynamically changed.

In the embodiment, the UE 200 can display information on the charge system. According to this configuration, a user of the UE 200 can easily specify the charge system which is dynamically changed.

### (10) Other embodiments

Although the embodiments have been described above, it is obvious to those skilled in the art that the embodiments are not limited to these descriptions but can be modified and improved in various ways.

The above disclosure illustrates a case in which the metered charge portion related to the data amount of communication has two types, "high charge" and "low charge". However, the disclosure described above is not limited to this. The metered charge portion related to the data amount of communication may have three or more types of charges.

In the disclosure described above, the information element related to the charge system is notified from the NW device 300 to the UE 200. However, the disclosure described above is not limited to this. The charge system may be stored (implemented) in the UE 200 in advance.

Although not specifically mentioned in the disclosure described above, the NW device 300 and the UE 200 may specify a time of day defining the charge system by NTP (Network Time Protocol) or GPS (Global Positioning System).

The block configuration diagram (FIG. 2 and FIG. 3) used in the description of the above-described embodiments illustrates blocks of functional units. Those functional blocks (structural components) can be realized by a desired combination of at least one of hardware and software. A means for realizing each functional block is not particularly limited. That is, each functional block may be realized by one device combined physically or logically. Alternatively, two or more devices separated physically or logically may be directly or indirectly connected (for example, using wired, wireless, or the like) to each other, and each functional block may be realized by these plural devices. The functional blocks may be realized by combining software with the one device or the plural devices described above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that functions to transmit is called a transmitting unit or a transmitter. As described above, the means for realizing is not particularly limited.

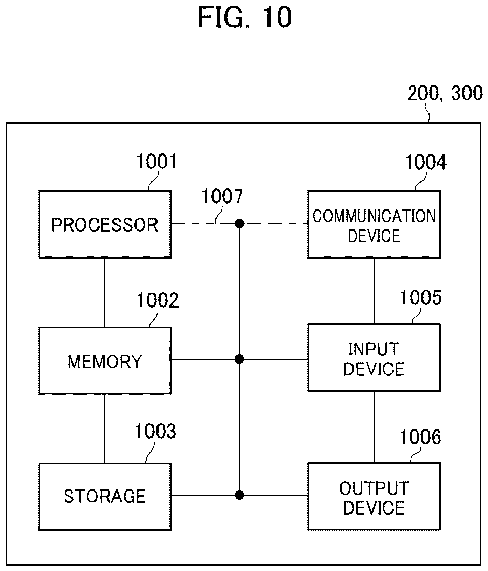

Furthermore, the UE 200 and the NW device 300 (apparatus) described above may function as computers for processing the radio communication method of the present disclosure. FIG. 10 is a diagram illustrating an example of a hardware configuration of the apparatus. As illustrated in FIG. 10, the apparatus may be configured as a computer device including a processor 1001, a memory 1002, a storage 1003, a communication device 1004, an input device 1005, an output device 1006, a bus 1007, and the like.

Note that, in the following description, the term "device" can be replaced with a circuit, a device, a unit, or the like. A hardware configuration of the apparatus can be constituted by including one or more of each of devices illustrated in the diagram, or can be constituted by without including a part of the devices.

Each functional block of the apparatus (see FIG. 4) is implemented by any of hardware elements of the computer device or a combination of the hardware elements.

Moreover, the processor 1001 performs computing by loading a predetermined software (computer program) on hardware such as the processor 1001 and the memory 1002, and realizes each function in the apparatus by controlling communication via the communication device 1004, and controlling at least one of reading and writing of data on the memory 1002 and the storage 1003.

The processor 1001, for example, operates an operating system to control the entire computer. The processor 1001 may be configured with a central processing unit (CPU), including an interface to a peripheral device, a controller, an arithmetic device, a register, and the like.

Moreover, the processor 1001 reads a computer program (program code), a software module, data, and the like from at least one of the storage 1003 and the communication device 1004 into the memory 1002, and executes various processes according to them. As the computer program, a computer program that causes the computer to execute at least a part of the operation in the above-described embodiments, is used. Alternatively, various processes described above may be executed by one processor 1001 or may be executed simultaneously or sequentially by two or more processors 1001. The processor 1001 may be implemented by using one or more chips. Note that the computer program may be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 may be referred to as a register, a cache, a main memory (main storage device), or the like. The memory 1002 can store a program (program code), a software module, or the like capable of executing a method according to the embodiment of the present disclosure.

The storage 1003 is a computer readable recording medium. For example, the storage 1003 may include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 may be called an auxiliary storage device. The recording medium described above may be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, or the like.

The communication device 1004 includes a high-frequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

Each of devices such as the processor 1001 and the memory 1002, is connected by a bus 1007 for communicating information. The bus 1007 may be configured using a single bus or a different bus for each device.

Further, the apparatus may be configured to include hardware such as a microprocessor, a digital signal processor (Digital Signal Processor: DSP), Application Specific Integrated Circuit (ASIC), Programmable Logic Device (PLD), Field Programmable Gate Array (FPGA), and the like. Some or all of the functional blocks may be realized by the hardware. For example, the processor 1001 may be implemented by using at least one of these hardware.

The notification of information is not limited to the aspects/embodiments described in the present disclosure, and may be performed using other methods. For example, the notification of information may be performed by physical layer signaling (e.g., Downlink Control Information (DCI), Uplink Control Information (UCI), higher layer signaling (e.g., RRC signaling, Medium Access Control (MAC) signaling, Broadcast Information (Master Information Block (MIB), System Information Block (SIB)), other signals, or combinations thereof. The RRC signaling may also be referred to as an RRC message, e.g., an RRC Connection Setup message, an RRC Connection Reconfiguration message, or the like.

Each of the above aspects/embodiments described in the present disclosure may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

The processing procedures, sequences, flowcharts, and the like of each of the above aspects/embodiments described in the present disclosure may be rearranged as long as there is no conflict. For example, the method described in the present disclosure presents the elements of the various steps using an exemplary sequence, and is not limited to the particular sequence presented.

The specific operation that is performed by the base station in the present disclosure may be performed by its upper node in some cases. In a network constituted by one or more network nodes having the base station, the various operations performed for communication with the terminal may be performed by at least one of the base station and other network nodes other than the base station (for example, MME, S-GW, or the like may be considered, but not limited thereto). Although, in the above, an example in which one other network node other than the base station is used has been described, a combination of a plurality of other network nodes (for example, MME and S-GW) may be used.

Information, and signals (information and the like) can be output from a higher layer (or lower layer) to a lower layer (or higher layer). It may be input and output via a plurality of network nodes.

The input/output information may be stored in a specific location (for example, a memory) or may be managed in a management table. The information to be input/output can be overwritten, updated, or added. The information having been output can be deleted. The information having been input can be transmitted to another device.

The determination may be made by a value (0 or 1) represented by one bit or by Boolean value (Boolean: true or false), or by comparison of numerical values (for example, comparison with a predetermined value).

Each of the above aspects/embodiments described in the present disclosure may be used alone or in combination, or may be switched as it is executed. Further, notification of predetermined information (for example, notification of "being X") is not limited to being performed explicitly, but it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, fiber optic cable, twisted pair, Digital Subscriber Line (DSL), or the like) and a wireless technology (infrared light, microwave, or the like), then at least one of these wired and wireless technologies is included within the definition of the transmission medium.

Information, signals, or the like described above may be represented by using any of a variety of different technologies. For example, data, instruction, command, information, signal, bit, symbol, chip, or the like that may be described throughout the above description, may be represented by voltage, current, electromagnetic wave, magnetic field or magnetic particle, optical field or photons, or a desired combination thereof.

Note that the terms described in this disclosure and the terms necessary for understanding the present disclosure may be replaced by terms having the same or similar meanings. For example, at least one of the channel and the symbol may be a signal (signaling). Also, the signal may be a message. Further, Component Carrier (CC) may be referred to as a carrier frequency, a cell, a frequency carrier, or the like.

The terms "system" and "network" used in the present disclosure can be used interchangeably.

Further, the information, the parameters, and the like described in the present disclosure can be represented by an absolute value, can be expressed as a relative value from a predetermined value, or can be represented by corresponding other information. For example, the radio resource can be indicated by an index.

The names used for the above-described parameters are not restrictive names in any respect. In addition, formulas and the like using these parameters may be different from those explicitly disclosed in the present disclosure. Because the various channels (for example, PUCCH, PDCCH, or the like) and information elements can be identified by any suitable names, the various names assigned to these various channels and information elements shall not be restricted in any way.

In the present disclosure, the terms "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the term such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform communication service in this coverage.

In the present disclosure, the terms "mobile station (Mobile Station: MS)," "user terminal," "user equipment (User Equipment: UE)," "terminal" and the like can be used interchangeably.

The mobile station is called by the persons skilled in the art as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or with some other suitable term.

At least one of the base station and the mobile station may be called a transmitting device, a receiving device, a communication device, or the like. Note that, at least one of the base station and the mobile station may be a device mounted on a moving body, a moving body itself, or the like. The mobile body may be a vehicle (for example, car, plane, etc.), an unmanned mobile body (for example, drone, self-driving car,), or a robot (manned or unmanned). At least one of the base station and the mobile station can be a device that does not necessarily move during the communication operation. For example, at least one of the base station and the mobile station may be an Internet of Things (IoT) device such as a sensor.

The base station in the present disclosure may be read as a mobile station (user terminal, the same applies hereinafter). For example, each aspect/embodiment of the present disclosure may be applied to a configuration in which communication between the base station and the mobile station is replaced by communication between a plurality of mobile stations (for example, it may be called device-to-device (D2D), vehicle-to-everything (V2X), etc.). In this case, the mobile station may have the function of the base station. Further, words such as "up" and "down" may be replaced with words corresponding to communication between terminals (for example, "side"). For example, up channels, down channels, etc. may be replaced with side channels (or side links).

Similarly, the mobile station in the present disclosure may be read as a base station. In this case, the base station may have the function of the mobile station.

A radio frame may be composed of one or more frames in the time domain. Each of one or more frames in the time domain may be referred to as a subframe.

The subframe may be further configured by one or more slots in the time domain. The subframes may be a fixed time length (for example, 1 ms) independent of numerology.

Numerology may be a communication parameter applied to at least one of transmission and reception of a certain signal or channel. The numerology may represent one among, for example, subcarrier spacing (SubCarrier Spacing: SCS), bandwidth, symbol length, cyclic prefix length, transmission time interval (Transmission Time Interval: TTI), number of symbols per TTI, radio frame configuration, specific filtering process performed by a transceiver in the frequency domain, specific windowing process performed by a transceiver in the time domain, and the like.

A slot may be configured with one or a plurality of symbols (Orthogonal Frequency Division Multiplexing (OFDM) symbols, Single Carrier Frequency Division Multiple Access (SC-FDMA) symbols, etc.) in the time domain. The slot may be a unit of time based on the numerology.

The slot may include a plurality of minislots. Each minislot may be configured with one or more symbols in the time domain. The minislot may also be called a subslot. The minislot may be composed of symbols fewer than symbols in one slot. PDSCH (or PUSCH) transmitted in units of time greater than the minislot may be referred to as PDSCH (or PUSCH) mapping type A. PDSCH (or PUSCH) transmitted using a minislot may be referred to as PDSCH (or PUSCH) mapping type B.

Each of the radio frame, subframe, slot, minislot, and symbol represents a time unit for transmitting a signal. Different names may be used for the radio frame, subframe, slot, minislot, and symbol.

For example, one subframe may be called a transmission time interval (TTI), a plurality of consecutive subframes may be called TTI, and one slot or one minislot may be called TTI. That is, at least one of the subframe and the TTI may be a subframe (1 ms) in the existing LTE, a period shorter than 1 ms (for example, 1-13 symbols), or a period longer than 1 ms. Note that, a unit representing TTI may be called a slot, a minislot, or the like instead of a subframe.

Here, TTI refers to a minimum time unit of scheduling in radio communication, for example. For example, in the LTE system, the base station performs scheduling for allocating radio resources (frequency bandwidth, transmission power, etc. that can be used in each user terminal) to each user terminal in units of TTI. The definition of TTI is not limited to this.

TTI may be a transmission time unit such as a channel-encoded data packet (transport block), a code block, or a code word, or may be a processing unit such as scheduling or link adaptation. Note that when TTI is given, a time interval (for example, the number of symbols) in which a transport block, a code block, a code word, or the like are actually mapped may be shorter than TTI.

When one slot or one minislot is called TTI, one or more TTIs (that is, one or more slots or one or more minislots) may be a minimum time unit of scheduling. The number of slots (number of minislots) constituting the minimum time unit of scheduling may be controlled.

TTI having a time length of 1 ms may be referred to as an ordinary TTI (TTI in LTE Rel. 8-12), a normal TTI, a long TTI, a normal subframe, a normal subframe, a long subframe, a slot, or the like. TTI shorter than the ordinary TTI may be referred to as a shortened TTI, a short TTI, a partial TTI (partial or fractional TTI), a shortened subframe, a short subframe, a minislot, a subslot, a slot, or the like.

Note that a long TTI (for example, ordinary TTI, subframe, etc.) may be read as TTI having a time length exceeding 1 ms, and a short TTI (for example, shortened TTI) may be read as TTI having TTI length of less than the TTI length of the long TTI but TTI length of 1 ms or more.

A resource block (RB) is a resource allocation unit in the time domain and the frequency domain, and may include one or a plurality of continuous subcarriers in the frequency domain. The number of subcarriers included in the RB may be the same regardless of the numerology, for example, twelve. The number of subcarriers included in the RB may be determined based on the numerology.

Also, the time domain of the RB may include one or a plurality of symbols, and may have a length of 1 slot, 1 minislot, 1 subframe, or 1 TTI. The 1 TTI, the 1 subframe, or the like may be composed of one or more resource blocks.

Note that, one or more RBs may be called a physical resource block (Physical RB: PRB), a subcarrier group (Sub-Carrier Group: SCG), a resource element group (Resource Element Group: REG), PRB pair, RB pair, or the like.

The resource block may be configured by one or more resource elements (Resource Element: RE). For example, one RE may be a radio resource area of one subcarrier and one symbol.

A bandwidth part (BWP) (which may be called a partial bandwidth, etc.) may represent a subset of contiguous common resource blocks (RBs) for a certain neurology in a certain carrier. Here, the common RB may be specified by an index of the RB relative to the common reference point of the carrier. The PRB may be defined in BWP and numbered within that BWP.

The BWP may include UL BWP (UL BWP) and DL BWP (DL BWP). One or more BWPs may be configured in one carrier for the UE.

At least one of the configured BWPs may be active, and the UE may not expect to transmit and receive certain signals/channels outside the active BWP. Note that "cell," "carrier," and the like in this disclosure may be read as "BWP."

The above-described structures such as a radio frame, a subframe, a slot, a minislot, and a symbol are merely examples. For example, the number of subframes included in the radio frame, the number of slots per the subframe or the radio frame, the number of minislots included in the slot, the number of symbols and RBs included in the slot or the minislot, the number of subcarriers included in the RB, the number of symbols included in the TTI, a symbol length, a cyclic prefix (CP) length, and the like, can be changed in various manner.

The terms "connected," "coupled," or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using one or more wires, cables, and printed electrical connections, and as some non-limiting and non-exhaustive examples, by using electromagnetic energy having wavelengths in a radio frequency region, a microwave region, and a light (both of visible and invisible) region, and the like.

A reference signal may be abbreviated as Reference Signal (RS), and may be called pilot (Pilot) according to applicable standards.

The phrase "based on" used in the present disclosure, does not mean "based only on" unless explicitly stated otherwise. In other words, the phrase "based on" means both "based only on" and "based at least on".

A "means" in a configuration of each device may be replaced with "unit", "circuit", "device", or the like.

Any reference to elements using designations such as "first" and "second" used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive OR.

In the present disclosure, for example, if articles such as a, an, and the in English are added during translation, these articles shall include a plurality of nouns following these articles.

The terms "determining" and "deciding" used in this disclosure may encompass a wide variety of actions. The terms "determining" and "deciding" includes deeming that determining and deciding have been performed by, for example, judging, calculating, computing, processing, deriving, investigating, searching (looking up, search, inquiry) (e.g., searching in a table, database, or other data structure), ascertaining, and the like. Also, the terms "determining" and "deciding" includes deeming that determining and deciding have been performed by, for example, receiving (e.g., receiving information), transmitting (e.g., transmitting information), inputting (input), outputting (output), and accessing (e.g., accessing data in a memory), and the like. Further, the terms "determining" and "deciding" include deeming that determining and deciding have been performed by, for example, resolving, selecting, choosing, establishing, comparing, and the like. In other words, the terms "determining" and "deciding" include deeming that "determining" and "deciding" regarding some actions has been performed. Furthermore, the term "determining (deciding)" may be read as "assuming," "expecting," "considering," and the like.

In the present disclosure, the phrase "A and B are different" may mean "A and B are different from each other". Note that the phrase may mean "A and B are each different from C". Terms such as "leave," "coupled," and the like may also be interpreted in the same manner as "different."

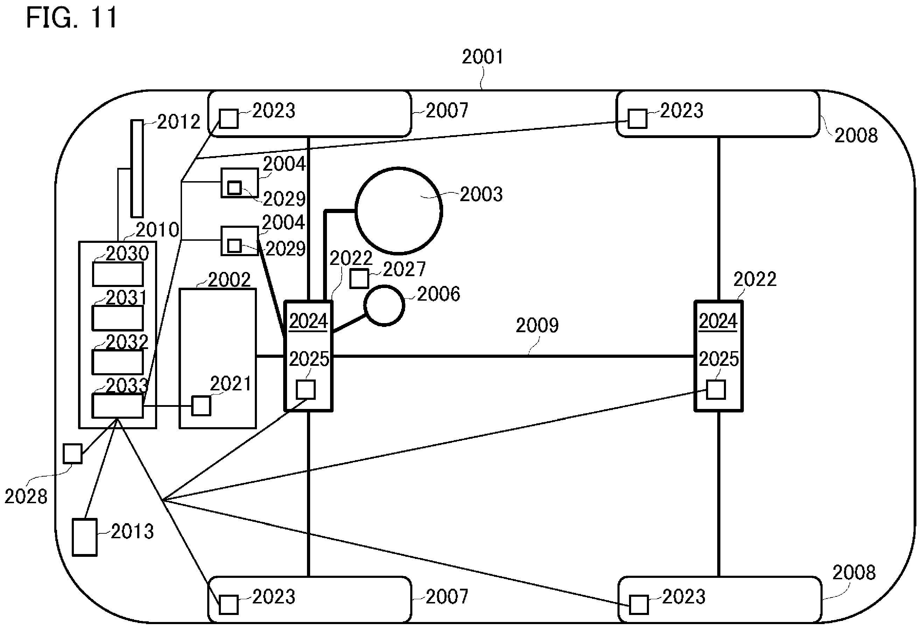

FIG. 11 illustrates a configuration example of a vehicle 2001. As illustrated in FIG. 11, the vehicle 2001 includes a drive unit 2002, a steering unit 2003, an accelerator pedal 2004, a brake pedal 2005, a shift lever 2006, left and right front wheels 2007, left and right rear wheels 2008, an axle 2009, an electronic control unit 2010, various sensors 2021 to 2029, an information service unit 2012, and a communication module 2013.

The drive unit 2002 includes, for example, an engine, a motor, and a hybrid of an engine and a motor.

The steering unit 2003 includes at least a steering wheel (also referred to as a handle), and is configured to steer at least one of front wheels and rear wheels, based on the operation of the steering wheel operated by a user.

The electronic control unit 2010 includes a microprocessor 2031, a memory (ROM, RAM) 2032, and a communication port (IO port) 2033. The electronic control unit 2010 receives signals from various sensors 2021 to 2027 provided in the vehicle. The electronic control unit 2010 may be called an ECU (electronic control unit).

The signals from the various sensors 2021 to 2028 include a current signal from a current sensor 2021 for sensing the current of a motor, a rotation speed signal of front wheels and rear wheels acquired by a rotation speed sensor 2022, a pressure signal of front wheels and rear wheels acquired by an air pressure sensor 2023, a vehicle speed signal acquired by a vehicle speed sensor 2024, an acceleration signal acquired by an acceleration sensor 2025, an accelerator pedal depression amount signal acquired by an accelerator pedal sensor 2029, a brake pedal depression amount signal acquired by a brake pedal sensor 2026, an operation signal of a shift lever acquired by a shift lever sensor 2027, and a detection signal, which is acquired by an object detection sensor 2028, for detecting obstacles, vehicles, pedestrians, and the like.

The information service unit 2012 includes: various devices such as a car navigation system, an audio system, a speaker, a television, and a radio for providing various information such as driving information, traffic information, and entertainment information; and one or more ECUs for controlling these devices. The information service unit 2012 provides various multimedia information and multimedia services to the occupants of the vehicle 1 by using information acquired from an external device via a communication module 2013 or the like.

A driving support system unit 2030 includes various devices for providing functions to prevent accidents or reduce the driver's driving load, such as a millimeter wave radar, light detection and ranging (LiDAR), a camera, a positioning locator (for example, GNSS), map information (for example, high-definition (HD) maps, autonomous vehicle (AV) maps, or the like), a gyroscopic system (for example, Inertial Measurement Unit (IMU), Inertial Navigation System (INS), or the like), an artificial intelligence (AI) chip, an AI processor, or the like; and one or more ECUs for controlling these devices. In addition, the driving support system unit 2030 transmits and receives various kinds of information via the communication module 2013 to realize a driving support function or an automatic driving function.

The communication module 2013 can communicate with the microprocessor 2031 and elements of the vehicle 1 via the communication port. For example, the communication module 2013 transmits and receives data via the communication port 2033 to and from the drive unit 2002, the steering unit 2003, the accelerator pedal 2004, the brake pedal 2005, the shift lever 2006, the right and left front wheels 2007, the right and left rear wheels 2008, the axle 2009, the microprocessor 2031 and the memory (ROM, RAM) 2032 in the electronic control unit 2010, and the sensors 2021 to 2028 all of which are provided in the vehicle 2001.

The communication module 2013 is a communication device that can be controlled by the microprocessor 2031 of the electronic control unit 2010, and can communicate with an external device. For example, the communication module 2013 transmits and receives various kinds of information with the external device by means of radio communication. The communication module 2013 may be provided inside or outside the electronic control unit 2010. The external device may be, for example, a base station, a mobile station, or the like.

The communication module 2013 transmits a current signal from a current sensor, which is input to the electronic control unit 2010, to an external device by means of radio communication. In addition, the communication module 2013 transmits to an external device by means of radio communication, a rotation speed signal of the front and rear wheels acquired by the rotation speed sensor 2022, an air pressure signal of the front and rear wheels acquired by the air pressure sensor 2023, a vehicle speed signal acquired by the vehicle speed sensor 2024, an acceleration signal acquired by the acceleration sensor 2025, an accelerator pedal depression amount signal acquired by the accelerator pedal sensor 2029, a brake pedal depression amount signal acquired by the brake pedal sensor 2026, a shift lever operation signal acquired by the shift lever sensor 2027, and a detection signal, which is acquired by the object detection sensor 2028, for detecting obstacles, vehicles, pedestrians, and the like. These signals are input to the electronic control unit 2010.

The communication module 2013 receives various pieces of information (traffic information, signal information, inter-vehicle information, and the like) transmitted from an external device, and displays them on the information service unit 2012 provided in the vehicle. The communication module 2013 also stores various pieces of information received from the external device in the memory 2032 usable by the microprocessor 2031. Based on the information stored in the memory 2032, the microprocessor 2031 may control the drive unit 2002, the steering unit 2003, the accelerator pedal 2004, the brake pedal 2005, the shift lever 2006, the left and right front wheels 2007, the left and right rear wheels 2008, the axle 2009, the sensors 2021 to 2028, and the like all of which are provided in the vehicle 2001.

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### [Explanation of Reference Numerals]

- 10: radio communication system
- 20: E-UTRAN
- 30: NG RAN
- 40: core network
- 50: E-SMLC
- 100A: eNB
- 100B: gNB
- 200: UE
- 210: communication unit
- 220: display unit
- 230: control unit
- 300: NW device
- 310: communication unit
- 320: management unit
- 330: control unit
- 1001: processor
- 1002: memory
- 1003: storage
- 1004: communication device
- 1005: input device
- 1006: output device
- 1007: bus
- 2001: vehicle
- 2002: drive unit
- 2003: steering unit
- 2004: accelerator pedal
- 2005: brake pedal
- 2006: shift lever
- 2007: left and right front wheels
- 2008: left and right rear wheels
- 2009: axle
- 2010: electronic control unit
- 2012: information service unit
- 2013: communication module
- 2021: current sensor
- 2022: rotation speed sensor
- 2023: air pressure sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A communication device comprising:
a communication unit that performs communication between a network device and a terminal; and
a control unit that specifies a charge system for the communication,
wherein the control unit specifies the charge system based on one or more parameters selected from among a parameter related to a type element of the communication, a parameter related to a time element of the communication, a parameter related to a location element of the communication, a parameter related to a method of the communication, and a parameter related to user information of the terminal.

2. The communication device according to claim 1, further comprising a notification unit that notifies the terminal of an information element related to a specified charge system when the communication device is the network device.

3. The communication device according to claim 1 or 2, further comprising a display unit that displays information on a specified charge system when the communication device is the terminal.

4. The communication device according to any one of claims 1 to 3, wherein the charge system is set based on at least any one of a communication history between the network device and the terminal, and selection of a user of the terminal.

5. A radio communication method comprising:
a step A of performing communication between a network device and a terminal; and
a step B of specifying a charge system for the communication,
wherein the step B includes a step of specifying the charge system based on one or more parameters selected from among a parameter related to a type element of the communication, a parameter related to a time element of the communication, a parameter related to a location element of the communication, a parameter related to a method of the communication, and a parameter related to user information of the terminal.
